# EUROPEAN PATENT SPECIFICATION

(11) **EP 4 596 268 B1**
(45) Date of publication and mention of the grant of the patent: **30.09.2026**
(21) Application number: 24155551.5
(22) Date of filing: 02.02.2024
(51) Int. Cl.: B60G 17/052

(54) **CABIN LEVELLING VALVE AND SYSTEM, COMMERCIAL VEHICLE, METHOD OF ASSEMBLING A CABIN LEVELLING VALVE, AND USE OF A CABIN LEVELLING VALVE**
KABINENNIVELLIERUNGSVENTIL UND SYSTEM, NUTZFAHRZEUG, VERFAHREN ZUR MONTAGE EINES KABINENNIVELLIERUNGSVENTILS UND VERWENDUNG EINES KABINENNIVELLIERUNGSVENTILS
VANNE DE NIVELLEMENT DE CABINE ET SYSTÈME, VÉHICULE UTILITAIRE, PROCÉDÉ D'ASSEMBLAGE D'UNE VANNE DE NIVELLEMENT DE CABINE ET UTILISATION D'UNE VANNE DE NIVELLEMENT DE CABINE

(43) Date of publication of application: 06.08.2025
(73) Proprietor: ZF CV Systems Europe BV, 1170 Brüssel (BE)
(72) Inventor: REPELA, Marek, 53238 Wroclaw (PL); YANG, Cathy, Shandong, 250100 (CN)
(74) Representative: Ohlendorf, Henrike

(56) References cited:
- EP-A1- 3 401 134
- EP-B1- 1 214 210
- WO-A1-2023/134424
- WO-A1-95/29823
- DE-B3- 102022 102 687
- FR-B1- 2 687 350

## Description

The invention relates to pneumatic system components configured for installation on a vehicle, such as a commercial vehicle. The invention relates in particular to a cabin levelling valve that is controllable to selectively inflate a gas bag or discharge gas from the gas bag to perform a cabin levelling operation. The invention also relates to a cabin levelling system and commercial vehicle comprising the cabin levelling valve and to methods of assembling and using the cabin levelling valve.

Pneumatic systems are used on vehicles in a wide variety of applications, including pneumatic suspension and levelling. Valves are important components of such suspension and levelling systems.

EP 1 214 210 B1 discloses a height control valve for a trailing-arm vehicle suspension that regulates the flow of pressurized air to and from an air spring in order to adjust the relative height between the vehicle frame and the suspension.

WO 95/29823 A1 discloses a height control valve for air-spring suspensions that includes an integrated dump valve enabling selective exhausting of air from the air springs while coordinating with the valve's control mechanism to manage frame-to-suspension positioning.

DE 10 2022 102687 B3 discloses a device for leveling height differences on a parked vehicle using a fluid-fillable lifting cushion made from a hose section whose openings are sealed by clamping strips with an inserted gasket.

EP 3 401 134 A1 and US 2019/0383431 A1 disclose valve configurations suitable for a pneumatic system of a vehicle. Valves such as the valve of EP 3 401 134 A1 may comprise ports for a supply of pressure gas, for discharging the pressure gas to a pneumatic component, and for exhausting the pressure gas.

FR2 687 350 B1 discloses a similar valve design with an alternative sealing concept.

When a valve of a cabin levelling system, such as a lever-operated cabin levelling valve, has a gap between outer shell components of the valve, there is a risk of ingress of foreign material, such as liquid (e.g., spray water) and/or particulate material (e.g., dust) and/or mud. A contamination of an interior of the cabin levelling valve resulting from foreign material ingress has the potential to adversely affect cabin levelling valve reliability.

Thus, there is a need for an enhanced cabin levelling valve configured to pass gas from a pressure source to a pneumatic component, in particular to a gas bag that is inflatable and deflatable to perform raising and lowering operations for a vehicle cabin, respectively. There is in particular a need for an enhanced cabin levelling valve with good reliability that can be efficiently assembled.

It is an object of the invention to provide a cabin levelling valve which has an enhanced cabin levelling valve life. It is in particular an object of the invention to provide such a cabin levelling valve which can be assembled in an efficient manner.

According to aspects of the invention, a cabin levelling valve, a cabin levelling system, a commercial vehicle, an assembly method, and a use as recited in the independent claims are provided. The dependent claims define preferred or advantageous embodiments.

According to an aspect, a cabin levelling valve is provided. The cabin levelling valve comprises a control member, a body, a cover attached to the body, and a gasket mounted between the body and the cover. The gasket abuts on the body and the cover. The cabin levelling valve comprises a supply port. The cabin levelling valve comprises a discharge port. The cabin levelling valve is configured to pass pressure gas received at the supply port to the discharge port for inflation of a pneumatic component to perform a first levelling operation when the control member is in a first position. The cabin levelling valve is configured to exhaust gas from the pneumatic component through the cabin levelling valve to perform a second levelling operation when the control member is in a second position.

Various effects are attained by the cabin levelling valve. The cabin levelling valve comprises a gasket interposed between and abutting on both the body and the cover. Thereby, the risk of ingress of foreign material (such as liquid(s) and/or particulate material and/or mud) into the cabin levelling valve is reduced. Cabin levelling valve life is extended by virtue of such a construction. The cabin levelling valve is configured in such a way that it provides ease of assembly, with the gasket being interposed between the body and the cover, while allowing the cabin levelling valve to be controlled via a mechanical linkage, which may be responsive to a change in cabin tilt and/or cabin height.

The control member may have a third position, which is also referred to as a neutral position. The cabin levelling valve may be configured in such a way that no pressure gas is supplied to the pneumatic component and no gas is exhausted from the pneumatic component via the cabin levelling valve when the control member is in the third position.

Thereby, the cabin levelling valve may also be used to perform the operation of maintaining a desired amount of gas in the pneumatic component and preventing an exhaust operation when the control member is in the third position.

The cabin levelling valve may comprise an integrated gas release assembly in a shell defined by the body and the cover. The integrated gas release assembly may be configured to perform a controllable check valve function to selectively allow gas to flow from the pneumatic component to an inner cavity defined between the body and the cover, to allow the gas to flow from the pneumatic component via the integrated gas release assembly, the inner cavity, and an one exhaust opening for deflating the pneumatic component. The integrated gas release assembly may be in a normally closed position when the control member is in the third position (i.e., the neutral position) and when the control member is in the first position (i.e., the position for inflation of the pneumatic component). The integrated gas release assembly may be controlled to selectively allow gas to flow from the pneumatic component for being exhausted when the control member is in the second position (i.e., the position for the deflation of the pneumatic component).

Thereby, the cabin levelling valve may ensure that the amount of gas in the pneumatic component is maintained if the control member is in the third position.

The cabin levelling valve may be a three-way valve. The cabin levelling valve may have three operating states, corresponding to inflation of the pneumatic component, deflation of the pneumatic component via the cabin levelling valve, and retaining an amount of gas in the pneumatic component. The cabin levelling valve may be a 3/3-way valve. The cabin levelling valve may be configured in such a way that a position of the control member controls in which of its three states the cabin levelling valve is.

Thereby, the cabin levelling valve is operative to perform, in a controllable manner, inflation of the pneumatic component, deflation of the pneumatic component, and maintaining the gas amount in the pneumatic component constant.

The gasket may be dimensioned to abut on the body and the cover in a close-fitting manner.

Thereby, the risk of foreign material ingress into the cabin levelling valve is reduced. This contributes to increasing cabin levelling valve life and reliability.

According to the invention, the gasket has a first major face in direct abutment on the body and a second major face in direct abutment on the cover, the second major face extending parallel to the first major face and being spaced from the first major face by a gasket height. Thereby, the gasket can abut on the body and the cover with its first and second major faces in a sealing manner, reducing the risk of foreign material ingress into the cabin levelling valve. This contributes to increasing cabin levelling valve life and reliability. The gasket may be compressible at least in a direction perpendicular to the first major face and the second major face. The gasket is compressed from an uncompressed gasket height to the gasket height when interposed between the cover and the body. Thereby, the gasket is configured in such a way that, when interposed between the cover and the body and compressed by the cover and the body, the first major face is pressed against the body and the second major face is pressed against the cover by virtue of a compression modulus of the gasket. This further reduces the risk of foreign material ingress into the cabin levelling valve and contributes to increasing the cabin levelling valve life and reliability.

The gasket may be reversibly elastically deformable.

Thereby, the gasket is configured in such a way that, when interposed between the cover and the body and compressed by the cover and the body, the first major face is pressed against the body and the second major face is pressed against the cover by virtue of an elastic return force of the gasket. This further reduces the risk of foreign material ingress into the cabin levelling valve and increases cabin levelling valve life. Disassembly and reassembly of the gasket is facilitated, e.g., for maintenance purposes, which is beneficial in view of reusability of the gasket.

A difference between the uncompressed gasket height and the gasket height of the gasket when interposed between the cover and the body may be at least 0.1 times the uncompressed gasket height. The difference between the uncompressed gasket height and the gasket height of the gasket when interposed between the cover and the body may be at most 0.55 times the uncompressed gasket height. The difference between the uncompressed gasket height and the gasket height of the gasket when interposed between the cover and the body may be at least 0.1 times the uncompressed gasket height and at most 0.55 the uncompressed gasket height.

Thereby, secure sealing is attained when the gasket is interposed between the body and the cover. This reduces the risk of foreign material ingress and increases the cabin levelling valve life and reliability.

The gasket height (i.e., the distance between the first major face and the second major face when the gasket is interposed between the cover and the body) may be at least 0.6 mm and at most 1.1 mm.

Thereby, secure sealing is attained when the gasket is interposed between the body and the cover. This contributes to increasing cabin levelling valve life and reliability.

According to the invention, the first major face and the second major face extend along an extension plane of the gasket. The gasket comprises a first straight portion in which the gasket extends along a first extension direction parallel to the extension plane, wherein the gasket has a first straight portion width throughout the first straight portion, the first straight portion width being measured perpendicular to the first extension direction and parallel to the extension plane. The gasket comprises a second straight portion in which the gasket extends along a second extension direction parallel to the extension plane, wherein the gasket has a second straight portion width throughout the second straight portion, the second straight portion width being measured perpendicular to the second extension direction and parallel to the extension plane, the second extension direction being different from the first extension direction. The gasket comprises an arcuate portion interposed between the first straight portion and the second straight portion.

Thereby, a gasket configuration is provided which is capable of operating as a plug along a U- or V-shaped ridge and/or groove. Secure sealing is attained by the gasket is interposed between the body and the cover. This contributes to increasing cabin levelling valve life and reliability.

The arcuate portion may comprise an arcuate portion outer wall having a further first radius of curvature around a further center of curvature and an arcuate portion inner wall having a further second radius of curvature around the further center of curvature. Thereby, the arcuate portion has a width between the arcuate portion outer wall and the arcuate portion inner wall that, measured in a radial direction from the further center of curvature, is constant throughout the arcuate portion. This ensures ease of manufacture and good sealing also in the arcuate portion, reducing the risk of foreign material ingress.

The first straight portion width may be equal to the second straight portion width and/or a difference between the further first radius of curvature and the further second radius of curvature.

Thereby, the gasket has a configuration in which the first straight portion, the second straight portion, and the arcuate portion interposed therebetween may have a same width, providing a reliable seal between the cover and the body.

The first straight portion width, the second straight portion width, and the difference between the further first radius of curvature and the further second radius of curvature may be at least 1.5 mm, at least 2.0 mm, or at least 2.2 mm.

Thereby, the gasket has a configuration in which the first straight portion, the second straight portion, and the arcuate portion interposed therebetween have a width operative to effectively reduce the risk of foreign material ingress, contributing to the cabin levelling valve life and reliability.

The first straight portion width, the second straight portion width, and the difference between the further first radius of curvature and the further second radius of curvature may be at least 1.2 times the gasket height, at least 1.4 times the gasket height, or at least 1.5 times the gasket height.

Thereby, the gasket has a configuration in which the first straight portion, the second straight portion, and the arcuate portion interposed therebetween have a width operative to effectively reduce the risk of foreign material ingress, contributing to the cabin levelling valve life and reliability.

The gasket may comprise one or several fastener passages for a fastener that fastens the cover to the body or more such fasteners. Alternatively or additionally, the gasket may comprise one or several tubular section passages for a tubular section of the body or of the cover or more such tubular sections.

Thereby, the gasket can be more reliably retained in its position while providing a circumferential seal around the fastener and/or the tubular section. The risk of foreign material ingress is reduced, contributing to the increase in cabin levelling valve life.

The cabin levelling valve may comprise fasteners that affix the cover to the body and which extend along a direction transverse, in particular perpendicular, to the first major face and the second major face.

Thereby, the cover and the body may be secured to each other so as to act on the first and second major faces of the gasket, reducing the risk of gasket displacement and reducing the risk of foreign material ingress. This contributes to the increase in cabin levelling valve life.

The cover or the body may comprise a recess in which the gasket is arranged.

Thereby, a seal comprising a labyrinth-type structure may be provided by the body, cover, and gasket which reduces the risk of foreign material ingress into the cabin levelling valve. This contributes to increasing cabin levelling valve life.

The body may comprise a raised portion extending into the recess of the cover, wherein the gasket is sandwiched between the raised portion and a surface portion of the cover delimiting the recess.

Thereby, a seal comprising a labyrinth-type structure may be provided by the body, cover, and gasket which further reduces the risk of ingress of liquid and/or particulate material into the cabin levelling valve. This contributes to increasing cabin levelling valve life.

The raised portion may comprise a ridge having a top surface, wherein the gasket abuts on the top surface of the ridge.

Thereby, reliable assembly of the gasket between the body and the cover is facilitated. The resultant reduction in liquid and/or particulate material ingress extends the cabin levelling valve life.

The body and the cover may be dimensioned in such a way that the raised portion is spaced from the cover by a gap, wherein the gasket is arranged in the gap.

Thereby, the gasket operates as a plug which closes the gap between the body and the cover. A seal may be attained by means of the gasket, which may yield when the cover and/or body exert forces on the gasket. Thereby, the risk of ingress of liquid and/or particulate material is reduced further. Moreover, greater versatility is available for choosing the material of the body and/or the cover, as the desired seal is attained by the gasket.

The gasket may be configured to reduce or prevent liquid ingress into the cabin levelling valve.

Thereby, the likelihood of ingress of liquid(s) into the cabin levelling valve is reduced. This is particularly important for commercial vehicles, in particular traction vehicles and/or lorries, where there may be a high risk of spray water, mud, or dirt entering a conventional cabin levelling valve. This contributes to the increase in cabin levelling valve life.

According to the invention, the gasket extends from a first free end of the gasket to a second free end of the gasket. The first free end of the gasket and the second free end of the gasket may be arranged in proximity to a rubber boot of the cabin levelling valve. The first free end of the gasket and the second free end of the gasket may be engaged with the rubber boot. The rubber boot may extend around part of the control member to provide protection for the control member.

Thereby, improved protection against ingress of foreign material into the cabin levelling valve is attained. This contributes to the increase in cabin levelling valve life and reliability.

The control member may project through a control member opening formed by the body and/or the cover. The rubber boot may abut on the cover and the body circumferentially around the control member opening.

Thereby, improved protection against ingress of foreign material into the cabin levelling valve is attained. This contributes to the increase in cabin levelling valve life.

The gasket may extend in a U- or V-shape (as seen in a plan view along a viewing direction perpendicular to the first major face and/or the second major face of the gasket) between the first free end and the second free end, having the arcuate portion arranged opposite both the first free end and the second free end.

Thereby, protection against ingress of foreign material into the cabin levelling valve can be attained along a U- or V-shaped raised portion of the body and/or recess of the cover.

The cabin levelling valve may comprise an exhaust aperture provided in one of the body and the cover at a location spaced from the gasket. The cabin levelling valve may provide more than one such exhaust apertures.

Thereby, the exhaust aperture is arranged spaced from the interface of the body and the cover, providing better protection against foreign material ingress with the gasket acting as a seal between the body and the cover. This contributes to the increase in cabin levelling valve life and reliability.

The control member may comprise a control lever.

Thereby, operation of the cabin levelling valve responsive to a change in attitude or height of the cabin by means of a linkage is facilitated.

The cabin levelling valve may further comprise a first connector mounted on or integral with the supply port and a second connector mounted on or integral with the discharge port.

Thereby, installation of a first fluid line (in particular a first gas line) that provides fluid communication between a pressure gas source and the cabin levelling valve, and of a second fluid line (in particular a second gas line) that provides fluid communication between the pneumatic component and the cabin levelling valve is facilitated.

The first connector may be a first quick release connector and/or the second connector may be a second quick release connector.

Thereby, installation of the cabin levelling valve is facilitated.

The body and/or the cover may comprise or may be made of a plastic material.

Thereby, ease of manufacture is attained.

The cabin levelling valve may have an ingress protection class of at least IP5K7K according to ISO 20653, such as an ingress protection class of IP5K9K according to ISO 20653.

Thereby, good protection against foreign material ingress is provided. The risk of cleaning agents entering the cabin levelling valve is reduced significantly or eliminated. Cabin levelling valve life is extended and reliability is enhanced.

According to another aspect of the invention, there is provided a gasket for installation between a body and a cover of a cabin levelling valve. The gasket is shaped to be sandwiched between the body and the cover to seal a gap between the body and the cover.

Thereby, a gasket is provided which reduces the risk of ingress of foreign material into the cabin levelling valve, thereby contributing to an extended life of the cabin levelling valve.

The gasket may be a gasket for the cabin levelling valve of any aspect or embodiment discloses herein. Optional features of the gasket correspond to the features disclosed in association with the cabin levelling valve.

According to another aspect of the invention, there is provided a cabin levelling system. The cabin levelling system comprises the cabin levelling valve of any aspect or embodiment disclosed herein, a pressure gas source configured to supply pressure gas to the supply port, a gas bag configured to inflate in the first levelling operation and to deflate in the second levelling operation, and a linkage connected to the control member. The linkage is configured to displace the control member from a neutral position to either the first position or the second position responsive to a change in load acting on a cabin of a vehicle. The cabin levelling system may comprise more than one such gas bag.

Thereby, a cabin levelling system is provided that comprises a cabin levelling valve providing enhanced protection against foreign material ingress, thereby enhancing the cabin levelling valve life and reliability.

According to another aspect of the invention, there is provided a commercial vehicle. The commercial vehicle comprises a cabin and the cabin levelling valve or cabin levelling system of any aspect or embodiment disclosed herein.

Thereby, a commercial vehicle is provided that comprises a cabin levelling valve providing enhanced protection against foreign material ingress, thereby enhancing the cabin levelling valve life and reliability. Maintenance and/or replacement work for the cabin levelling valve is thereby reduced.

The gas bag may be configured in such a way that inflation of the gas bag causes a part of the cabin to raise and deflation of the gas bag causes the part of the cabin to be lowered. The linkage and the control member may be configured in such a way that the change in load acting on the cabin causes the linkage to displace the control member to either the first position or the second position.

Thereby, cabin levelling is performed automatically, based on a mechanical operation input received by the cabin levelling valve. The attitude of the cabin may be adjusted by means of the cabin levelling valve supplying gas to the pneumatic component (such as a gas bag) or allowing gas to be exhausted from the pneumatic component via the cabin levelling valve.

According to another aspect of the invention, there is provided a method of assembling the cabin levelling valve according to an aspect or embodiment of the invention. The method comprises assembling the body and the cover and interposing the gasket between the body and the cover.

Thereby, the cabin levelling valve is configured to reduce the risk of liquid and/or particulate material entering the cabin levelling valve. Thus, the method provides a cabin levelling valve with enhanced life and reliability.

The method may further comprise assembling the cabin levelling valve in a cabin levelling system, comprising establishing a pneumatic connection between a pressure gas source and a establishing a further pneumatic connection between the discharge port of the cabin levelling valve and a pneumatic component (such as a gas bag) that is inflatable and deflatable for cabin levelling.

Thereby, a cabin levelling system is provided that comprises a cabin levelling valve configured to reduce the risk of foreign material ingress into the cabin levelling valve. Thus, the method provides a cabin levelling system with enhanced life and reliability.

The method may further comprise assembling the cabin levelling valve in a commercial vehicle, comprising establishing a pneumatic connection between a pressure gas source and a establishing a further pneumatic connection between the discharge port of the cabin levelling valve and a pneumatic component (such as a gas bag) that is inflatable and deflatable for cabin levelling, and further comprising connecting the control member of the cabin levelling valve to a linkage that is displaced responsive to a change in attitude of a cabin of the commercial vehicle.

Thereby, a commercial vehicle is provided having a cabin levelling valve configured to reduce the risk of foreign material ingress into the cabin levelling valve. Thus, the method provides a commercial vehicle with reduced maintenance and improved reliability.

According to another aspect of the invention, there is provided a use of the cabin levelling valve of any aspect or embodiment to reduce or prevent foreign material ingress (such as spray water ingress, dust ingress, and/or mud ingress) into the cabin levelling valve during operation of a commercial vehicle that comprises the cabin levelling valve.

Thereby, the cabin levelling valve may be used to reduce maintenance and/or repair work that might otherwise be required more frequently when installing a conventional cabin levelling valve.

Various effects and advantages are attained by the cabin levelling valve and the systems and methods disclosed herein. For illustration, the cabin levelling valve is configured to pass gas from a pressure source to a pneumatic component and to exhaust gas and has a configuration which reduces or eliminates the risk of foreign material entering the valve. Thus, a cabin levelling valve with increased life and reliability is provided.

Further advantages and embodiments and developments are provided by the configurations defined by the dependent claims. These and other aspects of the invention will be apparent from and elucidated with reference to the embodiments described hereafter with reference to the accompanying drawings, in which:
Fig. 1 is a partially exploded perspective view of a cabin levelling valve according to an embodiment of the invention;
Fig. 2 is another partially exploded perspective view of the cabin levelling valve;
Fig. 3 is a plan view showing a body of the cabin levelling valve;
Fig. 4 is a perspective view of a cover and a gasket of the cabin levelling valve;
Fig. 5 is a partial cross-sectional view of the cabin levelling valve;
Fig. 6 shows a detail of the cross-sectional view of Fig. 5;
Fig. 7 is another cross-sectional view of the cabin levelling valve;
Fig. 8 shows a portion of the cross-sectional view of Fig. 7 at an enlarged scale;
Fig. 9 is a perspective view of the gasket of the cabin levelling valve;
Fig. 10 is a plan view of the gasket of the cabin levelling valve;
Fig. 11 is a partial perspective view of the gasket of the cabin levelling valve;
Fig. 12 is a side view of the gasket of the cabin levelling valve;
Fig. 13 is a partial view of a pneumatic system comprising the cabin levelling valve connected to a linkage;
Fig. 14 is a partial view of a vehicle comprising a cabin levelling system that comprises the cabin levelling valve;
Fig. 15 is a schematic view of a commercial vehicle comprising the cabin levelling valve;
Fig. 16 is a flow chart of a method of assembling the cabin levelling valve; and
Fig. 17 is a flow chart of a method of using the cabin levelling valve.

Embodiments of the invention will be described with reference to the drawings. In the drawings, similar or identical reference signs designate elements with similar or identical configuration and/or function.

The invention relates to a cabin levelling valve that is configured to selectively establish fluid communication of a pneumatic component (such as a gas bag) with a pressure gas source for inflation of the pneumatic component and with ambient atmosphere via an exhaust aperture for deflation of the pneumatic component.

As used herein, the term "cabin levelling" refers to a mechanism configured to change an attitude of a cabin of a commercial vehicle, such as a traction vehicle or a lorry. The change in attitude can be a change in attitude relative to a surface on which the vehicle stands.

As used herein, the term "inflation" encompasses a partial inflation, i.e., an increase in the amount of gas in the pneumatic component. The term "deflation" encompasses a partial deflation, i.e., a decrease in the amount of gas in the pneumatic component.

As used herein, the term "gasket" refers to an element that at least reduces an ingress of liquid and/or particulate foreign material and/or mud into a cabin levelling valve. The gasket does not need to provide a gas-tight seal, but preferably is operative to provide a liquid-tight seal.

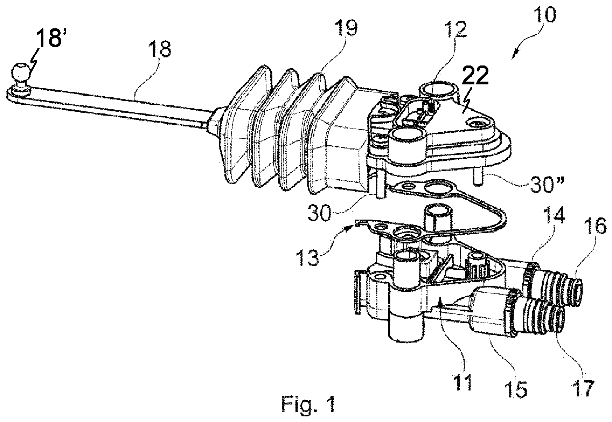

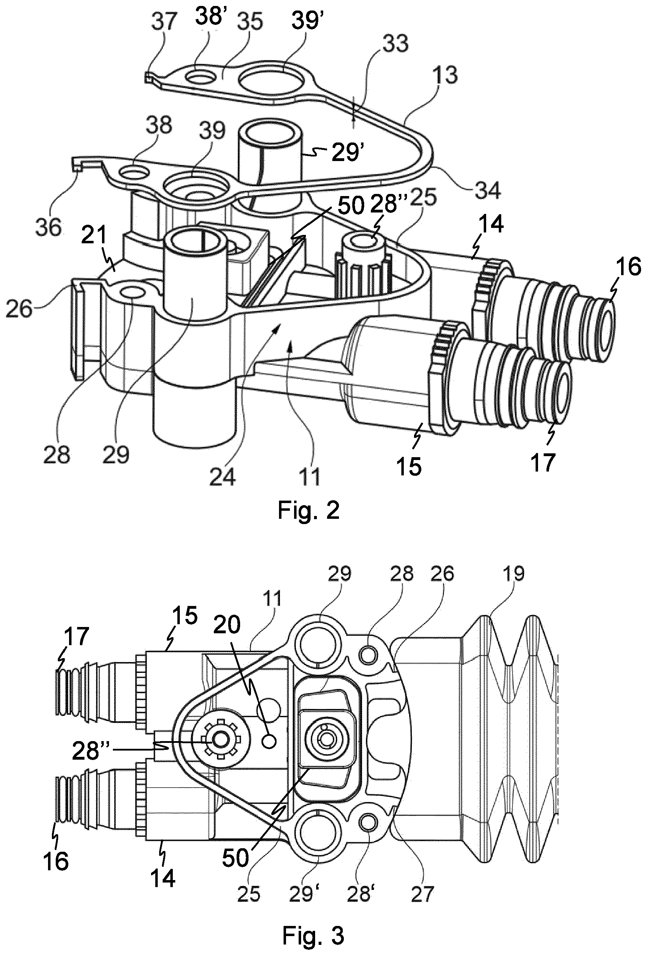

Fig. 1 is a partially exploded view of a cabin levelling valve 10 according to an embodiment of the invention. Fig. 2 shows a partial exploded view of the body 11 and the gasket 13 of the cabin levelling valve 10.

Cabin levelling valves improve driver comfort by maintaining a consistent cabin position. For cabs fitted with an air suspension system, the cabin levelling valve 10 may be configured to preserve a correct attitude, which provides an adaptation to cabin load and a range of road conditions.

The cabin levelling valve 10 comprises a body 11 and a cover 12 attached to the body by means of fasteners 30. In the assembled state of the cabin levelling valve 10, the body 11 and the cover 12 define an outer shell of the cabin levelling valve 10. Both the body 11 and the cover 12 comprise surfaces which are exposed when the cabin levelling valve 10 is assembled. The cabin levelling valve 10 comprises several fasteners 30, 30" to affix the cover 12 to the body 11.

The cabin levelling valve 10 comprises a supply port 14. A first connector 16 may be provided on the supply port 14. The cabin levelling valve 10 is configured in such a way that, when installed in a cabin levelling system, the supply port 14 of the cabin levelling valve 10 is in fluid communication with a pressure gas source. The first connector 16 may be a first quick release connector for ease of assembly.

The cabin levelling valve 10 comprises a discharge port 15. A second connector 17 may be provided on the discharge port 15. The cabin levelling valve 10 is configured in such a way that, when installed in a cabin levelling system, the discharge port 15 of the cabin levelling valve 10 is in fluid communication with a pneumatic component (such as a gas bag) configured to act on and change the attitude of a cabin. The second connector 17 may be a quick release connector for ease of assembly.

The cabin levelling valve 10 comprises a control member which is displaceable to control a state of the cabin levelling valve 10. The control member may comprise a control lever 18. The control lever 18 may comprise a coupling structure 18' for coupling to a mechanical linkage, such as a pin of a pivot connection configured for implementing a pivot connection of the control lever 18 with the mechanical linkage. A rubber boot 19 of the cabin levelling valve 10 may engage with both the body 11 and the cover 12. The rubber boot 19 may extend at least partially around a longitudinal axis of the control lever 18 to protect the control lever 18 while allowing movement between various control positions, such as first, second, and third positions which will be described in more detail below.

The cabin levelling valve 10 comprises a gasket 13. Features of the gasket 13 and its arrangement in the cabin levelling valve 10 are illustrated in more detail in Fig. 2. The gasket 13 may be arranged in a recess of one of the cover 12 and the body 11 (in the illustrated implementation, the recess is on the cover 12). The gasket 13 may also be positioned on a ridge of the other one of the cover 12 and the body 11 (in the illustrated implementation, the ridge is on the body 11). The gasket 13 may be compressed between the cover 12 and the body 11. The gasket 13 generally extends along a gap between the body 11 and the cover 12 and provides a sealing function to reduce or eliminate foreign material ingress into an interior of the cabin levelling valve 10.

The body 11 comprises a raised portion 24 that projects from a base 21 of the body 11 towards the cover 12. The raised portion 24 may project in a direction transverse to (e.g., substantially perpendicular) from the base 21. The raised portion 24 may extend as a continuous rim from a first free end 26 to a second free end 27 of the raised portion 24. The first free end 26 of the raised portion 24 and the second free end 27 of the raised portion 24 may be proximate the rubber boot 19. The first free end 26 of the raised portion 24 and the second free end 27 of the raised portion 24 may be configured for abutment of and/or engagement with the rubber boot 19. The raised portion 24 may comprise a top surface 25 that extends substantially in a plane and that may be substantially flat (with the optional exception of one or several projecting tube portions 29, 29'). The raised portion 24 may extend in a U- or V-shape, with the U- or V-shape extending from the first free end 26 of the raised portion 24 around a ceramics body 50 of the cabin levelling valve 10 to the second free end 27 of the raised portion 24. The first free end 26 of the raised portion 24 and the second free end 27 of the raised portion 24 may be provided at an end portion of the body 11 that is opposite to another end portion at which the supply port 14 and the discharge port 15 of the body 11 are provided.

The gasket 13 may have a sheet configuration. The gasket 13 comprises a first major face 34 in abutment on the body 11 and a second major face 35 in abutment on the cover 12. A gasket height 33 (which is the height when the gasket 13 is compressed between the body 11 and the cover 12) may be smaller than dimensions of the gasket 13 parallel to the plane in which the top surface 25 of the raised portion 24 extends. Side walls of the gasket that extend between the first major face 34 and the second major face 35 may have an area that is smaller than an area of each of the first major face 34 and of the second major face 35. The gasket height 33 (which is the height when the gasket 13 is compressed between the body 11 and the cover 12) is measured perpendicularly to the plane in which the top surface 25 extends. The gasket height 33 (i.e., the height of the gasket 13 when compressed between the body 11 and the cover 12) may be from 0.5 mm to 2.0 mm, for example.

The gasket 13 extends continuously from a first free end 36 of the gasket 13 to a second free end 37 of the gasket 13. The first free end 36 of the gasket 13 is arranged proximate the first free end 26 of the raised portion 24. The first free end 36 of the gasket 13 may abut on the first free end 26 of the raised portion 24. The second free end 37 of the gasket 13 is arranged proximate the second free end 27 of the raised portion 24. The second free end 37 of the gasket 13 may abut on the second free end 27 of the raised portion 24. The gasket 13 may have a U- or V-shape and may extend continuously on the top surface 25. The gasket 13 may abut on and be compressed against the top surface 25 to provide a sealing that extends continuously from the first free end 36 of the gasket 13 to the second free end 37 of the gasket 13.

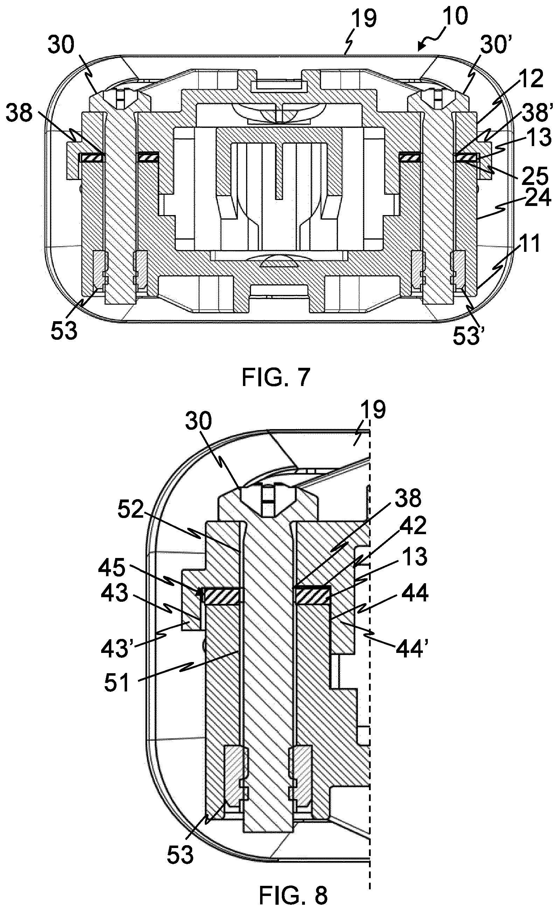

The body 11 comprises several fastener passages 28, 28" for the several fasteners 30, 30". The body 11 may comprise one or several tubular sections 29, 29'. The one or several tubular sections 29, 29' may be operative to mechanically interfacing the cabin levelling valve 10 with other vehicle components (e.g., for mounting the cabin levelling valve 10 in a cabin levelling system). The gasket 13 may comprise a gasket fastener passage 38 that allows the fastener 30 to pass therethrough and a further gasket fastener passage 38' that allows a further fastener 30' (shown in Fig. 7) to pass therethrough. The gasket fastener passage 38 may have an inner diameter matched to (e.g., equal to) an inner diameter of the fastener passage 28 of the body 11. Alternatively or additionally, the gasket 13 may have gasket tubular section passage 39 for the tubular section 29 and a further gasket tubular section passage 39' for the further tubular section 29'. The gasket tubular section passage 39 may have an inner diameter matched to (e.g., equal to) an outer diameter of the tubular section 29 of the body 11. The further gasket tubular section passage 39' may have an inner diameter matched to (e.g., equal to) an outer diameter of the further tubular section 29' of the body 11.

The cabin levelling valve 10 may be configured in such a way that not all fasteners that affix the cover 12 to the body 11 pass through a corresponding gasket fastener passage. For illustration, the body 11 may have a fastener passage 28" that is offset along the base 21 of the body 11 relative to the gasket 13 in such a manner that the fastener 30" inserted into the fastener passage 28" does not pass through any gasket fastener passage formed in the gasket 13.

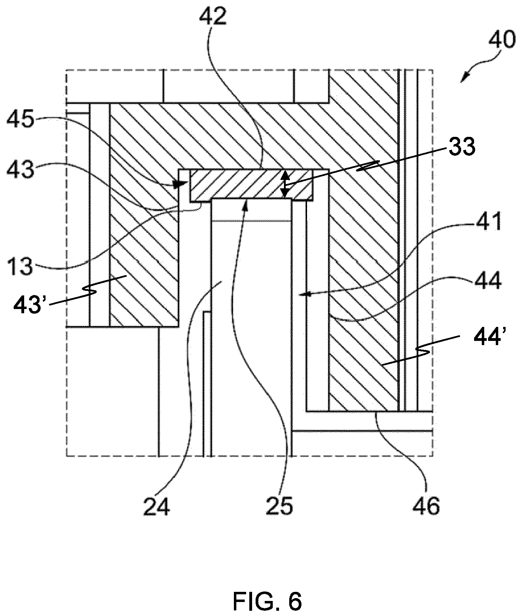

The first major face 34 of the gasket 13 and the second major face 35 of the gasket 13 extend substantially parallel to each other. The first major face 34 abuts on the top surface 25 of the raised portion 24 of the body 11, optionally in a close-fitting manner. The second major face 35 abuts on a surface portion of the cover 12 which delimits a recess (Fig. 6, Fig. 7, and Fig. 8).

Fig. 3 shows a plan view of the body 11 of the cabin levelling valve 10 and the rubber boot 19 provided thereon, with a direction of view directed perpendicular to the plane in which the top surface 25 of the raised portion 24 extends. The cabin levelling valve 10 comprises an exhaust aperture that is spaced from the interface between the cover 12 and the body 11 at which the gasket 13 is provided. For illustration, the exhaust aperture may comprise one or several exhaust apertures 20 at the body 11. The one or several exhaust apertures 20 may be formed as through holes in the base 21 of the body 11. The one or several exhaust apertures 20 are positioned spaced from the interface between the cover 12 and the body 11.

The cabin levelling valve 10 may be configured as a three-way valve comprising three ports, without being limited thereto. The cabin levelling valve 10 may be configured as a 3/3-way valve, having three ports (the supply port 14, the discharge port 15, and the exhaust aperture 20) and three operation states. The cabin levelling valve 10 may be configured in such a way that, when the control lever 18 is in a first position (which may also be referred to as inflation position), a fluid communication is established between the supply port 14 and the discharge port 15. In this operation state, the cabin levelling valve 10 is configured to pass pressure gas received at the supply port 14 from a pressure gas source to the discharge port 15 for inflating the pneumatic member. The cabin levelling valve 10 may be configured in such a way that, when the control lever 18 is in a second position (which may also be referred to as deflation or exhaust position), a fluid communication is established between the discharge port 15 and an inner cavity defined between the cover 12 and the body 11 to thereby fluidly communicate the discharge port 15 with the exhaust aperture 20. In this operation state, the cabin levelling valve 10 is configured to pass gas received at the discharge port 15 via the exhaust aperture 20 to ambient atmosphere. The cabin levelling valve 10 may be configured in such a way that, when the control lever 18 is in a third position (which may also be referred to as neutral position), the cabin levelling valve 10 shuts off the discharge port 15 from the exhaust aperture 20 and the supply port 14. In this operation state, the cabin levelling valve 10 is configured to ensure that the amount of gas in the pneumatic member does not change via the cabin levelling valve 10.

The cabin levelling valve 10 may be configured in such a way that the third position is an intermediate position between the first position and the second position of the control lever. This facilitates control of the cabin levelling valve 10 via a mechanical linkage which acts as input to the control lever 18.

Various configurations may be used to implement the desired fluidic configuration of the cabin levelling valve 10. For illustration, the cabin levelling valve may be a slider valve, such as a ceramic slider valve, with movement of the control member 18 selectively opening and closing flow paths (e.g., by displacement of a slider which may be made from a ceramic material 50). A slidable component having gas flow passages formed therein may be biased into a position (e.g., by a spring such as a coil spring) in which the discharge port 15 is not in fluid communication with either the supply port 14 or the exhaust aperture 20. Other implementations are possible. For illustration rather than limitation, the cabin levelling valve 10 may comprise a normally closed first control valve (e.g., a 2/2-way valve) between the discharge port 15 and the supply port 14 which is selectively opened when the control lever 18 is in the first position. The cabin levelling valve 10 may comprise a normally closed second control valve (e.g., a 2/2-way valve) between the discharge port 15 and the exhaust aperture 20, which is selectively opened when the control lever 18 is in the second position. Still other configurations may be used to implement the pneumatic function of the cabin levelling valve disclosed herein.

To reduce the risk of ingress of liquid and/or particulate material into the cabin levelling valve 10, the gasket 13 is provided. The gasket 13 is interposed between and abuts on the cover 12 and the body 11 in a close-fitting manner. The gasket 13 may comprise or may be formed of a compressible material. The gasket 13 may be configured in such a way that it is compressible in a reversibly manner, returning to an uncompressed height when disassembled from the cabin levelling valve. Irrespective of whether the gasket 13 has elastic return characteristics, the gasket 13 may have an uncompressed height that is greater than the gasket height 33 when the gasket 13 is installed in and compressed between the cover 12 and the body 11. The gasket 13 have a height that is selected in accordance with, and slightly larger than, a gap between the cover 12 and the body 11 so that the gasket 13 can efficiently plug the gap between the cover 12 and the body 11. The gasket 13 may be configured in such a way that a difference between the uncompressed gasket height and the gasket height 33 is at least 0.1 times the uncompressed gasket height and at most 0.55 times the uncompressed gasket height.

The cabin levelling valve 10 provides enhanced resistance against ingress of liquid and/or particulate material, such as mud, dirt, or spray water. The gasket 13 reduces the risk of ingress along the interface of the body 11 and the cover 12. The rubber boot 19 attaches to the cover 12, the first and second free ends 36, 37 of the gasket 13, and the first and second free ends 26, 27 of the raised portion 24. The rubber boot 19 may extend circumferentially around the control lever 18 in proximity to the cover 12 and the body 11. Abutment of the rubber boot 19 on the first and second free ends 36, 37 of the gasket 13 may reduce the risk of foreign material ingress at an interface between the rubber boot 19 and the body 11, the cover 12, and the gasket 13. Thus, the risk of ingress of mud, dirt, liquids, or other undesirable foreign materials into the cabin levelling valve 10 is reduced by the construction of the cabin levelling valve 10.

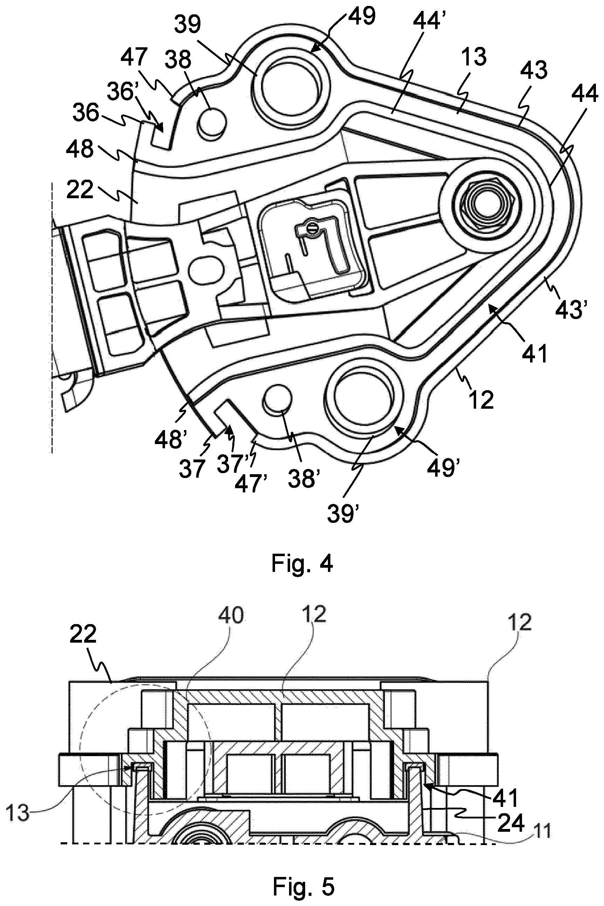

Fig. 4 shows a perspective view of the cover 12 of the cabin levelling valve 10 with the gasket 13 disposed in a recess 41 of the cover 12. The cover 12 comprises the recess 41 that is shaped to receive the gasket 13. The recess 41 is shaped to allow the raised portion 24 of the body 11 to enter the recess 41 for abutment on and compression of the gasket 13. The cover 12 comprises an outer side wall 43' and an inner side wall 44' that define the recess 41 therebetween. The outer side wall 43' extends continuously from a first outer side wall end 47 arranged in proximity to the first free end 36 of the gasket 13 to a second outer side wall end 47' arranged in proximity to the second free end 37 of the gasket 13. The inner side wall 44' extends continuously from a first inner side wall end 48 arranged in proximity to the first free end 36 of the gasket 13 to a second inner side wall end 48' arranged in proximity to the second free end 37 of the gasket 13. Each of the inner side wall 44' and the outer side wall 43' may project from a cover major face 22 of the cover 12 towards the base 21 of the body 21. Each of the inner side wall 44' and the outer side wall 43' may project in a direction transverse (e.g., perpendicular) to the cover major face 22. The inner side wall 44' and the outer side wall 43' may be dimensioned to overlap with the raised portion 24 of the body 11 when the body 11 and the cover 12 are affixed to each other in the cabin levelling valve 10. The inner side wall 44' may have an inner side wall surface 44 that delimits the recess 41. The outer side wall 43' has an outer side wall surface 43 that delimits the recess 41 and is positioned so as to allow the raised portion 24 to enter between the outer side wall surface 43 and the inner side wall surface 44, while leaving a gap for positioning the gasket 13.

The cover 12 may comprise additional features designed to mechanically interface the cover 12 with the body 11, such as cover tubular passages 49, 49' configured to receive therein an associated tubular portion 29, 29' of the body 11 and/or cover fastener passages for allowing a fastener shaft to pass through the cover 12 and into the fastener passages 28, 28', 28" of the body 11.

As also shown in Fig. 4, the gasket 13 may optionally be shaped to comprise a first gasket engagement recess 36' for engagement with the rubber boot 19 and/or a second gasket engagement recess 37' for engagement with the rubber boot 19. The first gasket engagement recess 36' is arranged at and delimited, at least on one side, by the first free end 36 of the gasket 13. The second gasket engagement recess 37' is arranged at and delimited, at least on one side, by the second free end 37 of the gasket 13.

Fig. 5 shows a cross-sectional view of the cabin levelling valve 10. Fig. 6 shows a detail 40 of the cross-sectional view. The cover 12 comprises the recess 41 into which the raised portion 24 projects. The cover 12 and the body 11 are shaped in such a way that, when a contact surface 46 of the cover 12 is in abutment on a mating contact surface (such as the ceramics 50 and/or a mating contact surface of the body 11), the top surface 25 of the raised portion remains spaced from the cover 12 by a gap 45. The recess 41 is delimited by the inner side wall surface 44 and the outer side wall surface 43. The recess 41 is further delimited by a surface portion 42 (which may be the recess bottom when viewing the cover 12 in a direction as seen from the body 11) that delimits the recess 41 and faces the top surface 25. The surface portion 42 may extend along the top surface 25 and parallel to the top surface 25. The gasket 13 is sandwiched between and abuts on the top surface 25 and the surface portion 42 in a close-fitting manner. Thus, the gasket 13 is effective in reducing the risk of ingress of foreign materials into the cabin levelling valve. The labyrinth-type structure formed by the recess 41 and raised portion 24 further contributes to reducing the risk of ingress of foreign materials such as mud, dirt, or spray water.

The cabin levelling valve 10 may be configured in such a manner that the labyrinth-seal formed by the recess 41, the raised portion 24 projecting thereinto, and the gasket 13 compressed between the cover 12 and the body 11 extends continuously from the first free end 36 of the gasket 13 (which is forced against the first free end 26 of the raised portion 24) to the second free end 37 of the gasket 13 (which is forced against the second free end 27 of the raised portion 24).

Fig. 7 shows another cross-sectional view of the cabin levelling valve 10. Fig. 8 shows a detail of the cross-sectional view of Fig. 7 on an enlarged scale. The other cross-sectional view of Fig. 7 and Fig. 8 has a cross-sectional plane that passes through centers of the gasket fastener passage 38 and the further gasket fastener passage 38'. A viewing direction is directed towards the rubber boot 19. The gasket fastener passage 38 and the further gasket fastener passage 38' each allow a shaft of an associated fastener 30, 30' to pass into the body 11 for engagement with a mating engagement member 53, 53', such as a nut.

The gasket 13, the recess 41 formed on the cover 12 by the inner side wall surface 44, the outer side wall surface 43 and the surface portion 42, and the raised portion 24 provide a labyrinth seal that provides reliable sealing around the fastener passages of the body 11 and the cover 12. At each of the fastener passages 38, 38', the gasket 13 is compressed in its height direction (i.e., the direction perpendicular to the first major face 34 and the second major face 35) in a compression region that circumferentially extends around the axis of the fastener shafts of an associated one of the fasteners 30, 30'.

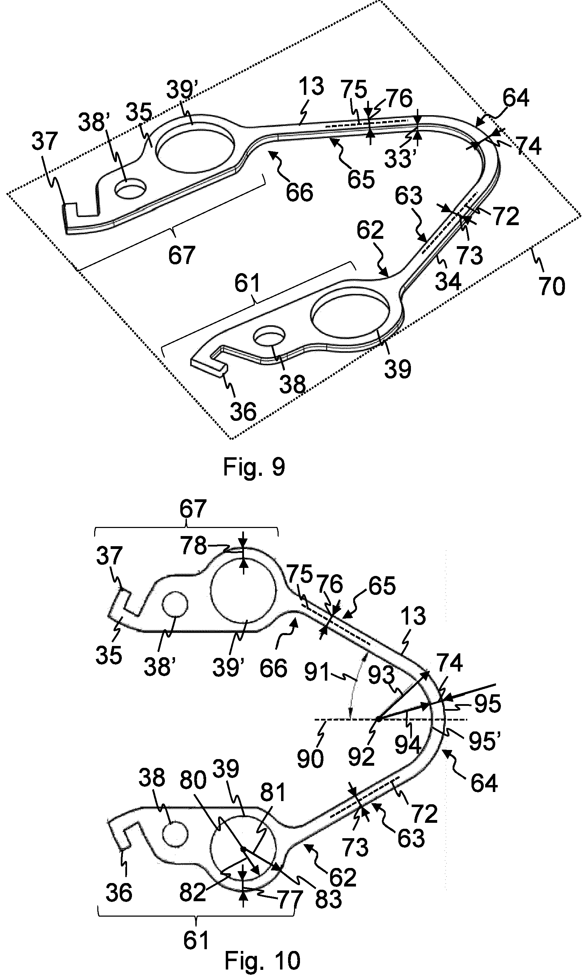

Fig. 9 shows a perspective view of the gasket 13. Fig. 10 shows a plan view of the gasket 13 (as seen in a viewing direction perpendicular to the first major face 34 and the second major face 35). The gasket 13 extends along an extension plane 70. The first major face 34 and the second major face 35 are each substantially parallel to the extension plane 70. The extension plane 70 may be a center plane between the first major face 34 and the second major face 35. Features of the gasket 13 already explained in detail with reference to Fig. 1 to Fig. 8 are designated with the same reference numerals, with reference being made to the explanations already provided in association with Fig. 1 to Fig. 8.

The gasket 13 is generally U- or V-shaped, when viewed in a direction perpendicular to the first major face 34 and the second major face 35. The gasket 13 comprises a first end portion 61, a first straight portion 63, an arcuate portion 64, a second straight portion 65, and a second end portion 67. The first end portion 61 comprises the first free end 36 of the gasket 13. The first end portion 61 may comprise the gasket fastener passage 38 and the gasket tubular passage 39. The second end portion 67 may comprise the second free end 37 of the gasket 13. The second free end portion 67 may comprise the further gasket fastener passage 38' and the further gasket tubular passage 39'. In the first end portion 61 and in the second end portion 67, the gasket 13 may have a width, measured from its outer wall remote from a symmetry axis 90 of the gasket to an inner wall facing toward the symmetry axis 90 of the gasket 13, which is greater than a width of the gasket in the first straight portion 63, the arcuate portion 64, and the second straight portion 65. The gasket 13 may comprise a first transition portion 62 in which a width of the gasket 13, measured parallel to the extension plane 70, tapers from the first end portion 61 to the first straight portion 63. The gasket 13 may comprise a second transition portion 66 in which a width of the gasket 13, measured parallel to the extension plane 70, tapers from the second end portion 67 to the second straight portion 65.

The first end portion 61 and the second end portion 67 may be configured in such a manner that a width 77, 78 of the gasket 13 surrounding each gasket fastener passage 38, 38' and/or each gasket tubular passage 39, 39' is at least, e.g., 1.0 mm or at least 1.3 mm or at least 1.5 mm. For illustration, and as shown in association with the gasket tubular passage 39, the gasket 13 may be shaped in such a way that, in the first end portion 61, the gasket comprises an arcuate outer surface portion 83 which may extend transverse (e.g., perpendicular) to the extension plane 70. The arcuate outer surface portion 83 may have a first radius of curvature 81 relative to a curvature center 80. An opening through the gasket 30 at the gasket tubular passage 39 may be cylindrical and may have a second radius of curvature 82 relative to the same curvature center 80. A difference between the first radius of curvature 81 and the second radius of curvature 82 may define a width 77 of gasket material which may be at least, e.g., 1.0 mm or at least 1.3 mm or at least 1.5 mm.

The first straight portion 63 extends along a first extension direction 72 which is a first straight line parallel to the extension plane 70. The first straight portion 63 has a cross section, taken perpendicular to the first extension direction 72, which remains the same throughout the first straight portion 63. A first straight portion width 73 is the width of the first straight portion 63 measured in a measurement direction perpendicular to the first extension direction 72 and parallel to the extension plane 70. The first straight portion width 73 may be, e.g., at least 1.5 mm or at least 2.0 mm or at least 2.3 mm when the gasket 13 is installed in the cabin levelling valve 10.

The second straight portion 65 may be arranged so as to be mirror-symmetric, in relation to a symmetry axis 90, relative to the first straight portion 62. The second straight portion 65 extends along a second extension direction 75, which is a second straight line parallel to the extension plane 70. The second straight portion 65 has a cross section, taken perpendicular to the second extension direction 75, which remains the same throughout the second straight portion 65. A second straight portion width 76 is the width of the second straight portion 65 measured in a measurement direction perpendicular to the second extension direction 75 and parallel to the extension plane 70. The second straight portion width 76 may be, e.g., at least 1.5 mm or at least 2.0 mm or at least 2.3 mm when the gasket 13 is installed in the cabin levelling valve 10. The first straight portion width 73 and the second straight portion width 76 may be substantially equal.

The arcuate portion 64 is interposed between the first straight portion 63 and the second straight portion 65. The arcuate portion 64 has an arcuate portion outer wall 95 and an arcuate portion inner wall 95'. The arcuate portion outer wall 95 and the arcuate portion inner wall 95' may extend generally transverse to (e.g., perpendicular) to the extension plane 70 of the gasket 13. The arcuate portion outer wall 95 may have a further first radius of curvature 93 relative to a further center of curvature 92. The arcuate portion inner wall 95' may have a further second radius of curvature 94. An arcuate portion width 74 may be determined by a difference of the further first radius of curvature 93 and the further second radius of curvature 94.

The gasket 13 may be configured in such a way that the first straight portion width 73, the arcuate portion width 74, and the second straight portion width 76 are all equal. The gasket 13 may be configured in such a way that the first straight portion width 73, the arcuate portion width 74, and the second straight portion width 76 may be, e.g., at least 1.5 mm or at least 2.0 mm or at least 2.3 mm when the gasket 13 is installed in the cabin levelling valve 10. Alternatively or additionally, the gasket 13 may be configured in such a way that the first straight portion width 73, the arcuate portion width 74, and the second straight portion width 76 is at least 1.2 times the gasket height 33, at least 1.5 times the gasket height 33, or at least 1.8 times the gasket height 33.

The arcuate portion 64 may extend through an angle around the further center of curvature 92 which ensures that arcuate portion 64 provides a smooth and continuous transition between the first straight portion 63 and the second straight portion 65. The first straight portion 63 and the second straight portion 65 may respectively be arranged in such a way that their extension direction 72, 75 is provided at an angle 91 relative to the symmetry axis 90, which angle 91 may be, e.g., at least 20° and at most 50°. The arcuate portion 64 may extend around the further center of curvature 92 through an angle which is two times the angle 91 between the second extension direction 75 and the symmetry axis 90.

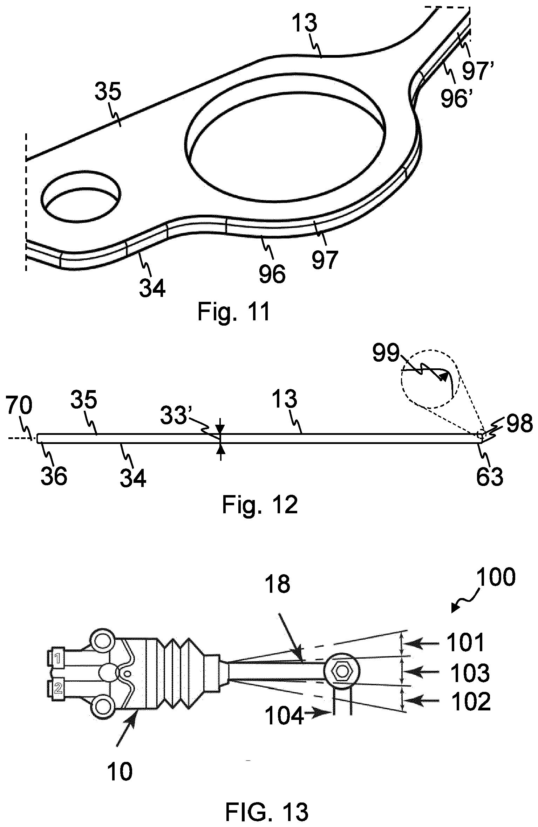

Fig. 11 is a partial perspective view of the gasket 13. The gasket 13 has wall portions (or minor faces) that extend between the first major face 34 and the second major face 35. The wall portions comprise several outer wall portions such as an outer wall portion 96 and a further outer wall portion 96' which may be angled relative to the outer wall portion 96, due to the geometry of the gasket 13. The outer wall portions 96, 96' may continuously transition into the first and/or second major face 34, 35 by a wall transition portion. For illustration, a wall transition portion 97 may provide a smooth transition of the outer wall portion 96 into the second major face 35. A further wall transition portion 97' may provide a smooth transition of the further outer wall portion 96' into the second major face 35.

Fig. 12 is a side view of the gasket 13 when the gasket 13 is not installed in the cabin levelling valve 10 (e.g., prior to installation of the gasket 13 and/or after removal of the gasket 13 from the cabin levelling valve 10). In this state, the gasket 13 has an uncompressed gasket height 33' which is generally greater than the gasket height 33 when the gasket compressed between the cover 12 and the body 11. Wall transition portions 98 that transition the minor face of the gasket 13 into the major face(s) 34, 35 may have a wall transition radius of curvature 99. The wall transition radius of curvature 99 may be less than 0.3 mm or less than 0.25 mm, to ensure that a significant part of the gasket 13 remains in tight abutment with the cover 12 and the body 11 upon compression of the gasket 13 between the cover 12 and the body 11.

Fig. 13 shows a partial view of a cabin levelling system 100 comprising the cabin levelling valve 10 and a linkage 104. When loads cause a cabin attitude to change, the linkage 104 displaces the control lever 18 from a neutral position 103 to a first position 101 (for inflation of a gas bag) or a second position 102 (for deflation of the gas bag), depending on whether a portion of the cabin is to be raised or lowered by the respective gas bag.

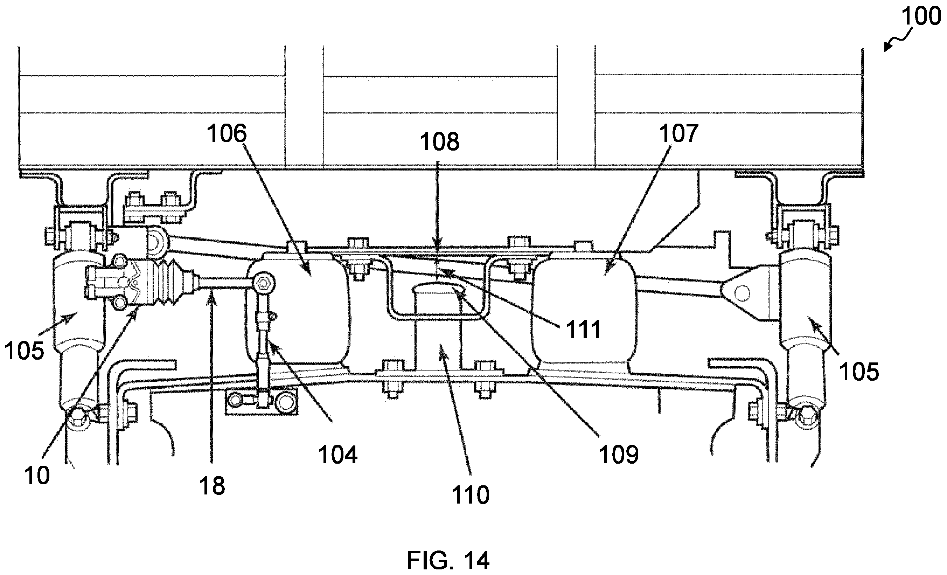

Fig. 14 shows a schematic view of a cabin levelling system installed in a commercial vehicle. The cabin levelling system comprises the cabin levelling valve 10, a pressure gas source (not visible in Fig. 14) configured to supply pressure gas to the supply port, a gas bag 106 configured to inflate when the control lever 18 is in the first position 101 and to deflate when the control lever 18 is in the second position 102, and a linkage 104 connected to the control member. The linkage 104 may be arranged to extend vertically when the commercial vehicle stands on a horizontal surface. The linkage 104 is configured to displace the control lever 18 from the neutral position 103 to either the first position 101 or the second position 102 responsive to a change in load acting on a cabin of the commercial vehicle.

The commercial vehicle may comprise shock absorbers 105, a further gas bag 107 and optionally an associated further cabin levelling valve, and other components. For illustration, movement of the cabin may be delimited by an upper stop 108, a rubber cap 109, and a lower stop 110, with the upper stop 108 being spaced from the rubber cap 109 by a spacing 111 in at least some operation states.

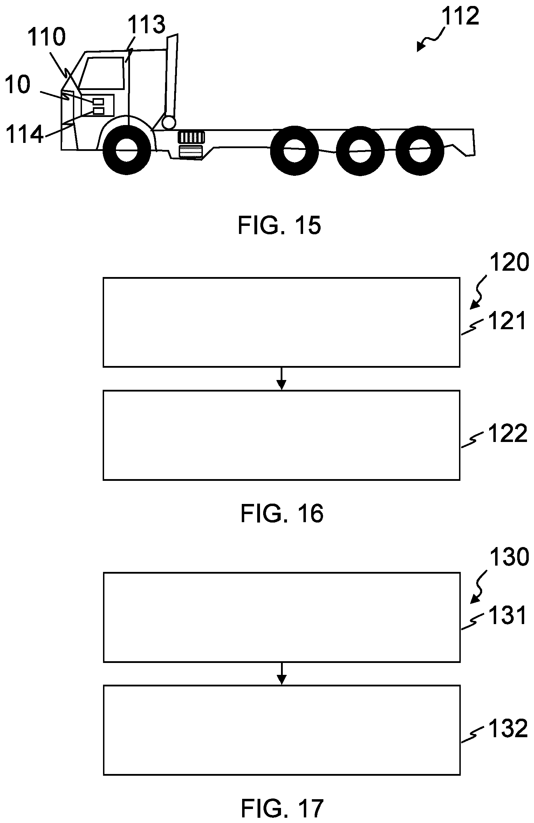

Fig. 15 is a schematic view of a commercial vehicle 112. The commercial vehicle 112 may be a traction vehicle or a lorry, for example. The commercial vehicle 112 comprises a cabin levelling system 100 comprising the cabin levelling valve 10 and a pressure source 114 in fluid communication with the supply port 14.

The cabin levelling valve 10 is configured in such a way that, when the attitude of a cabin 113 is to be readjusted, the cabin levelling valve 10 receives a mechanical input generated by the load acting on a part of the cabin 113. The cabin levelling valve 10 is configured in such a way that, responsive to the mechanical input, the cabin levelling valve 10 causes a levelling action to be performed by causing a pneumatic member (e.g., a gas bag) to inflate or deflate, to thereby adjust the attitude of the cabin 113.

Fig. 16 is a flow chart of a method 120 of assembling the cabin levelling valve 10. The method 120 may be performed automatically by or using an assembly system.

The method comprises a process block 121 of assembling the body 11 and the cover 12. The method comprises a process block 122 of interposing the gasket 13 between the body 11 and the cover 12. Process block 122 may comprise compressing the gasket 13 between the body 11 and the cover 12.

The method 120 may further comprise assembling the cabin levelling valve 10 in a cabin levelling system 100, comprising establishing a pneumatic connection between a pressure gas source and a establishing a further pneumatic connection between the discharge port of the cabin levelling valve 10 and a pneumatic component (such as a gas bag 106, 107) that is inflatable and deflatable for cabin levelling.

Fig. 17 is a flow chart of a method 130 of using the cabin levelling valve 10 to reduce or prevent foreign material ingress (such as spray water ingress, dust ingress, and/or mud ingress) into the cabin levelling valve 10 during operation of a commercial vehicle 112 that comprises the cabin levelling valve 10.

The method 130 comprises a process block 131 of performing, by the cabin levelling valve 10, a cabin levelling operation. The method 130 comprises a process block 132 of reducing, by the seal provided by the gasket 13, the recess 41, and the raised portion 24, foreign material ingress into the cabin levelling valve 10.

While embodiments have been described with reference to the drawings, modifications and alterations may be implemented in other embodiments.

For illustration, while embodiments have been described in which the cabin levelling valve has a supply port, discharge port, and exhaust aperture that are all formed on the body, one or several of the ports may additionally or alternatively be formed on the cover. For further illustration, while embodiments have been described in which the exhaust aperture may comprise through holes in the body or the cover, the exhaust aperture may comprise only one through hole or may comprise through holes both in the body and in the cover. For further illustration, while embodiments have been described in which the cabin levelling valve is a 3/3-way valve, other valve configurations may be used.

For further illustration, the invention may be applied to a variety of cabin levelling valve configurations, including cabin levelling valves which are slider valves.

Various effects and advantages are attained by embodiments of the invention. Embodiments provide an enhanced cabin levelling valve which reduces the risk of foreign material ingress into the cabin levelling valve. The exhaust aperture may comprise a sealing member which is configured to be installed efficiently in overlapping relationship with one or several through opening(s) of the exhaust aperture, to reduce the risk of foreign material ingress into the cabin levelling valve. Thus, the cabin levelling valve provides enhanced mud protection and, thus, enhanced life.

### List of Reference Numerals (part of the description)

- 10: cabin levelling valve
- 11: body
- 12: cover
- 13: gasket
- 14: supply port
- 15: discharge port
- 16, 17: connector
- 18: control lever
- 18': coupling structure
- 19: rubber boot
- 20: exhaust aperture
- 21: base
- 22: cover major face
- 24: raised portion
- 25: top surface
- 26, 27: free end of raised portion
- 28, 28', 28": fastener passage
- 29, 29': tubular passage
- 30, 30', 30": fastener
- 33: gasket height
- 33': uncompressed gasket height
- 34: first major face
- 35: second major face
- 36, 37: free end of gasket
- 36', 37': gasket engagement recess
- 38, 38': gasket fastener passage
- 39, 39': gasket tubular section passage
- 40: detail
- 41: recess
- 42: cover surface portion delimiting recess
- 43: side wall surface of outer side wall
- 43': outer side wall
- 44: side wall surface of inner side wall
- 44': inner side wall
- 45: gap
- 46: cover contact surface
- 47, 47': outer side wall end
- 48, 48': inner side wall end
- 49, 49': cover tubular passage
- 50: ceram ics
- 51: body fastener passage
- 52: cover fastener passage
- 53, 53': mating engagement member
- 61: first end portion
- 62: first transition portion
- 63: first straight portion
- 64: arcuate portion
- 65: second straight portion
- 66: second transition portion
- 67: second end portion
- 70: extension plane
- 72: first extension direction
- 73: first straight portion width
- 74: arcuate portion width
- 75: second extension direction
- 76: second straight portion width
- 77: first circumferential portion width
- 78: second circumferential portion width
- 80: center of curvature
- 81: first radius of curvature
- 82: second radius of curvature
- 83: arcuate outer surface portion
- 90: symmetry axis
- 91: angle
- 92: further center of curvature
- 93: further first radius of curvature
- 94: further second radius of curvature
- 95: arcuate portion outer wall
- 95': arcuate portion inner wall
- 96: outer wall portion
- 96': further outer wall portion
- 97: wall transition portion
- 97': further wall transition portion
- 98: curved wall transition portions
- 99: wall transition radius of curvature
- 100: cabin levelling system
- 101: first position
- 102: second position
- 103: neutral position
- 104: linkage
- 105: shock absorber
- 106, 107: gas bag
- 108: upper stop
- 109: rubber cap
- 110: lower stop
- 111: spacing
- 112: commercial vehicle
- 113: cabin
- 114: pressure source
- 120: method
- 121, 122: process block
- 130: method
- 131, 132: process block

## Claims

1. A cabin levelling valve (10), comprising:
a control member (18);
a body (11);
a cover (12) attached to the body (11); and
a gasket (13) mounted between the body (11) and the cover (12), wherein the gasket (13) abuts on the body (11) and the cover (12);
wherein the body (11) or the cover (12) comprises a supply port (14);
wherein the body (11) or the cover (12) comprises a discharge port (15);
wherein the cabin levelling valve (10) is configured to
pass pressure gas received at the supply port (14) to the discharge port (15) for inflation of a pneumatic component (106) to perform a first levelling operation when the control member (18) is in a first position (101) and
exhaust gas from the pneumatic component (106) through the cabin levelling valve (10) to perform a second levelling operation when the control member (18) is in a second position (102),
wherein the gasket (13) has a first major face (34) in direct abutment on the body (11) and a second major face (35) in direct abutment on the cover (12), the second major face (35) extending parallel to the first major face (34) and being spaced from the first major face (34) by a gasket height (33),
wherein the first major face (34) and the second major face (35) extend along an extension plane (70) of the gasket (13), wherein the gasket (13) comprises
a first straight portion (63) in which the gasket (13) extends along a first extension direction (72) parallel to the extension plane (70), wherein the gasket (13) has a first straight portion width (73) throughout the first straight portion (63), the first straight portion width (73) being measured perpendicular to the first extension direction (72) and parallel to the extension plane (70),
a second straight portion (65) in which the gasket (13) extends along a second extension direction (75) parallel to the extension plane (70), wherein the gasket (13) has a second straight portion width (76) throughout the second straight portion (65), the second straight portion width (76) being measured perpendicular to the second extension direction (75) and parallel to the extension plane (70), the second extension direction (75) being different from the first extension direction (72), and
an arcuate portion (64) interposed between the first straight portion (63) and the second straight portion (65),
wherein the gasket (13) extends from a first free end (36) of the gasket (13) to a second free end (37) of the gasket (13).

2. The cabin levelling valve (10) of claim 1, wherein the gasket (13) is dimensioned to abut on the body (11) and the cover (12) in a close-fitting manner.

3. The cabin levelling valve (10) of any one of claims 1 or 2, wherein the gasket (13) is compressible in a direction perpendicular to the first major face (34) and the second major face (35), wherein the gasket (13) is compressed from an uncompressed gasket height to the gasket height (33) between the cover (12) and the body (11).

4. The cabin levelling valve (10) of claim 3, where a difference between the uncompressed gasket height (33') and the gasket height (33) is at least 0.1 times the uncompressed gasket height (33') and at most 0.55 times the uncompressed gasket height (33').

5. The cabin levelling valve (10) of any one of claims 1 to 4, wherein the gasket height (33) is at least 0.6 mm and at most 1.1 mm.

6. The cabin levelling valve (10) of any one of claims 1 to 5, wherein the arcuate portion (64) comprises an arcuate portion outer wall (95) having a further first radius of curvature (93) around a further center of curvature (92) and an arcuate portion inner wall (94) having a further second radius of curvature (94) around the further center of curvature (92).

7. The cabin levelling valve (10) of claim 6, wherein the first straight portion width (73) is equal to one or both of:
the second straight portion width (76);
a difference (74) between the further first radius of curvature (93) and the further second radius of curvature (94).

8. The cabin levelling valve (10) of any one of the preceding claims, wherein the cover (12) or the body (11) comprises a recess (41) in which the gasket (13) is arranged.

9. The cabin levelling valve (10) of claim 8, wherein the body (11) comprises a raised portion (24) extending into the recess (41), wherein the gasket (13) is sandwiched between the raised portion (24) and a surface portion (42) of the cover (12) delimiting the recess (41).

10. The cabin levelling valve (10) of any one of the preceding claims, wherein the gasket (13) comprises passages (38, 38', 39, 39'), comprising one or both of:
a fastener passage (38, 38') for a fastener (30) that fastens the cover (12) to the body (11);
a tubular section passage (39, 39') for a tubular section (28) of the body (11) or of the cover (12).

11. A cabin levelling system (100), comprising:
the cabin levelling valve (10) of any one of the preceding claims;
a pressure gas source (114) configured to supply pressure gas to the supply port (14);
a gas bag (106) configured to inflate in the first levelling operation and to deflate in the second levelling operation; and
a linkage (104) connected to the control member (18) and configured to displace the control member (18) from a neutral position to either the first position or the second position responsive to a change in load acting on a cabin of a vehicle.

12. A commercial vehicle (112), comprising:
a cabin (113); and
the cabin levelling system (100) of claim 11,
wherein the gas bag (106) is configured in such a way that inflation of the gas bag (106) causes a part of the cabin (113) to raise and deflation of the gas bag (106) causes the part of the cabin (113) to be lowered, and
wherein the linkage (104) and the control member (18) are configured in such a way that the change in load acting on the cabin causes the linkage (104) to displace the control member (18) to either the first position (101) or the second position (102).

13. A method of assembling the cabin levelling valve (10) of any one of claims 1 to 10, the method comprising:
assembling the body (11) and the cover (12); and
interposing the gasket (13) between the body (11) and the cover (12).

14. Use of the cabin levelling valve (10) of any one of claims 1 to 10 to reduce or prevent foreign material ingress into the cabin levelling valve (10) during operation of a commercial vehicle (112) comprising the cabin levelling valve (10).

## Patentansprüche

1. Kabinennivellierungsventil (10), umfassend:
ein Steuerelement (18);
einen Körper (11);
eine an dem Körper (11) befestigte Abdeckung (12); und
eine Dichtung (13), die zwischen dem Körper (11) und der Abdeckung (12) montiert ist, wobei
die Dichtung (13) an dem Körper (11) und der Abdeckung (12) anliegt;
wobei das Gehäuse (11) oder die Abdeckung (12) einen Zufuhr-Port (14) umfasst;
wobei der Körper (11) oder die Abdeckung (12) einen Auslass-Port (15) umfasst;
wobei das Kabinennivellierungsventil (10) konfiguriert ist, um
an dem Zufuhr-Port (14) empfangenes Druckgas an den Auslass-Port (15) zum Aufpumpen einer pneumatischen Komponente (106) zu leiten, um einen ersten Ausgleichsvorgang durchzuführen, wenn sich das Steuerelement (18) in einer ersten Position (101) befindet, und
Gas aus der pneumatischen Komponente (106) durch das Kabinennivellierungsventil (10) abzulassen, um einen zweiten Ausgleichsvorgang durchzuführen, wenn sich das Steuerelement (18) in einer zweiten Position (102) befindet,
wobei die Dichtung (13) eine erste Hauptfläche (34), die direkt an dem Körper (11) anliegt, und eine zweite Hauptfläche (35), die direkt an der Abdeckung (12) anliegt, aufweist, wobei sich die zweite Hauptfläche (35) parallel zu der ersten Hauptfläche (34) erstreckt und von der ersten Hauptfläche (34) durch eine Dichtungshöhe (33) beabstandet ist,
wobei sich die erste Hauptfläche (34) und die zweite Hauptfläche (35) entlang einer Erstreckungsebene (70) der Dichtung (13) erstrecken, wobei die Dichtung (13) umfasst:
einen ersten geraden Abschnitt (63), in dem sich die Dichtung (13) entlang einer ersten Erstreckungsrichtung (72) parallel zu der Erstreckungsebene (70) erstreckt, wobei die Dichtung (13) über den gesamten ersten geraden Abschnitt (63) eine erste Breite des geraden Abschnitts (73) aufweist, wobei die erste Breite des geraden Abschnitts (73) senkrecht zu der ersten Erstreckungsrichtung (72) und parallel zu der Erstreckungsebene (70) gemessen wird,
einen zweiten geraden Abschnitt (65), in dem sich die Dichtung (13) entlang einer zweiten Erstreckungsrichtung (75) parallel zu der Erstreckungsebene (70) erstreckt, wobei die Dichtung (13) über den gesamten zweiten geraden Abschnitt (65) eine zweite Breite des geraden Abschnitts (76) aufweist, wobei die zweite Breite des geraden Abschnitts (76) senkrecht zu der zweiten Erstreckungsrichtung (75) und parallel zu der Erstreckungsebene (70) gemessen wird, wobei sich die zweite Erstreckungsrichtung (75) von der ersten Erstreckungsrichtung (72) unterscheidet, und
einen bogenförmigen Abschnitt (64), angeordnet zwischen dem ersten geraden Abschnitt (63) und dem zweiten geraden Abschnitt (65), wobei sich die Dichtung (13) von einem ersten freien Ende (36) der Dichtung (13) zu einem zweiten freien Ende (37) der Dichtung (13) erstreckt.

2. Kabinennivellierungsventil (10) nach Anspruch 1, wobei die Dichtung (13) so dimensioniert ist, dass sie passgenau an dem Körper (11) und der Abdeckung (12) anliegt.

3. Kabinennivellierungsventil (10) nach einem der Ansprüche 1 oder 2, wobei die Dichtung (13) in einer Richtung senkrecht zu der ersten Hauptfläche (34) und der zweiten Hauptfläche (35) komprimierbar ist, wobei die Dichtung (13) von einer unkomprimierten Dichtungshöhe auf die Dichtungshöhe (33) zwischen der Abdeckung (12) und dem Körper (11) komprimiert ist.

4. Kabinennivellierungsventil (10) nach Anspruch 3, wobei eine Differenz zwischen der unkomprimierten Dichtungshöhe (33') und der Dichtungshöhe (33) mindestens das 0,1-Fache der unkomprimierten Dichtungshöhe (33') und höchstens das 0,55-Fache der unkomprimierten Dichtungshöhe (33') beträgt.

5. Kabinennivellierungsventil (10) nach einem der Ansprüche 1 bis 4, wobei die Dichtungshöhe (33) mindestens 0,6 mm und höchstens 1,1 mm beträgt.

6. Kabinennivellierungsventil (10) nach einem der Ansprüche 1 bis 5, wobei der bogenförmige Abschnitt (64) eine Außenwand des bogenförmigen Abschnitts (95), die einen weiteren ersten Krümmungsradius (93) um einen weiteren Krümmungsmittelpunkt (92) aufweist, und eine Innenwand des bogenförmigen Abschnitts (94), die einen weiteren zweiten Krümmungsradius (94) um den weiteren Krümmungsmittelpunkt (92) aufweist, umfasst.

7. Kabinennivellierungsventil (10) nach Anspruch 6, wobei die Breite des ersten geraden Abschnitts (73) gleich einem oder beiden ist von:
der Breite des zweiten geraden Abschnitts (76);
einer Differenz (74) zwischen dem weiteren ersten Krümmungsradius (93) und dem weiteren zweiten Krümmungsradius (94).

8. Kabinennivellierungsventil (10) nach einem der vorstehenden Ansprüche, wobei die Abdeckung (12) oder der Körper (11) eine Aussparung (41) umfasst, in der die Dichtung (13) angeordnet ist.

9. Kabinennivellierungsventil (10) nach Anspruch 8, wobei der Körper (11) einen erhabenen Abschnitt (24) umfasst, der sich in die Aussparung (41) erstreckt, wobei die Dichtung (13) zwischen dem erhabenen Abschnitt (24) und einem Oberflächenabschnitt (42) der Abdeckung (12), die die Aussparung (41) begrenzt, sandwichartig angeordnet ist.

10. Kabinennivellierungsventil (10) nach einem der vorstehenden Ansprüche, wobei die Dichtung (13) Durchgänge (38, 38', 39, 39') umfasst, umfassend eines oder beides von:
einem Befestigungselementdurchgang (38, 38') für ein Befestigungselement (30), das die Abdeckung (12) an dem Körper (11) befestigt;
einem Rohrabschnittsdurchgang (39, 39') für einen Rohrabschnitt (28) des Körpers (11) oder der Abdeckung (12).

11. Kabinennivellierungssystem (100), umfassend:
das Kabinennivellierungsventil (10) nach einem der vorstehenden Ansprüche;
eine Druckgasquelle (114), die konfiguriert ist, um dem Zufuhr-Port (14) Druckgas zuzuführen;
einen Gassack (106), der konfiguriert ist, um sich in dem ersten Ausgleichsvorgang aufzublasen und sich in dem zweiten Ausgleichsvorgang zu entleeren; und
ein Gestänge (104), das mit dem Steuerelement (18) verbunden und konfiguriert ist, um das Steuerelement (18) als Reaktion auf eine Änderung einer auf eine Kabine eines Fahrzeugs wirkenden Last aus einer Neutralposition in entweder die erste Position oder die zweite Position zu verlagern.

12. Nutzfahrzeug (112), umfassend:
eine Kabine (113); und
das Kabinennivellierungssystem (100) nach Anspruch 11,
wobei der Gassack (106) derart konfiguriert ist, dass das Aufblasen des Gassacks (106) ein Anheben eines Teils der Kabine (113) veranlasst und das Entleeren des Gassacks (106) ein Absenken des Teils der Kabine (113) veranlasst, und
wobei das Gestänge (104) und das Steuerelement (18) derart konfiguriert sind, dass die auf die Kabine wirkende Laständerung veranlasst, dass das Gestänge (104) das Steuerelement (18) entweder in die erste Position (101) oder in die zweite Position (102) verlagert.

13. Verfahren zum Zusammenbauen des Kabinennivellierungsventils (10) nach einem der Ansprüche 1 bis 10, das Verfahren umfassend:
Zusammenbauen des Körpers (11) und der Abdeckung (12); und
Anordnen der Dichtung (13) zwischen dem Körper (11) und der Abdeckung (12).

14. Verwendung des Kabinennivellierungsventils (10) nach einem der Ansprüche 1 bis 10 zur Verringerung oder Verhinderung des Eindringens von Fremdmaterial in das Kabinennivellierungsventils (10) während des Betriebs eines Nutzfahrzeugs (112), das das Kabinennivellierungsventil (10) umfasst.

## Revendications

1. Valve de mise à niveau de cabine (10), comprenant :
un élément de commande (18) ;
un corps (11) ;
un couvercle (12) fixé au corps (11) ; et
une garniture d'étanchéité (13) montée entre le corps (11) et le couvercle (12), dans laquelle
la garniture d'étanchéité (13) vient en butée sur le corps (11) et le couvercle (12) ;
dans laquelle le corps (11) ou le couvercle (12) comprend un orifice d'alimentation (14) ;
dans laquelle le corps (11) ou le couvercle (12) comprend un orifice d'évacuation (15) ;
dans laquelle la valve de mise à niveau de cabine (10) est conçue pour
faire passer du gaz sous pression reçu au niveau de l'orifice d'alimentation (14) vers l'orifice d'évacuation (15) pour le gonflage d'un composant pneumatique (106) pour mettre en œuvre une première opération de mise à niveau lorsque l'élément de commande (18) est dans une première position (101) et
évacuer le gaz du composant pneumatique (106) à travers la valve de mise à niveau de cabine (10) pour mettre en œuvre une seconde opération de mise à niveau lorsque l'élément de commande (18) est dans une seconde position (102),
dans laquelle la garniture d'étanchéité (13) a une première face principale (34) en butée directe sur le corps (11) et une seconde face principale (35) en butée directe sur le couvercle (12), la seconde face principale (35) s'étendant parallèle à la première face principale (34) et étant espacée de la première face principale (34) par une hauteur de garniture d'étanchéité (33),
dans laquelle la première face principale (34) et la seconde face principale (35) s'étendent le long d'un plan d'extension (70) de la garniture d'étanchéité (13), dans laquelle la garniture d'étanchéité (13) comprend
une première portion linéaire (63) dans laquelle la garniture d'étanchéité (13) s'étend le long d'une première direction d'extension (72) parallèle au plan d'extension (70), dans laquelle la garniture d'étanchéité (13) a une largeur de première portion linéaire (73) sur l'ensemble de la première portion linéaire (63), la largeur de première portion linéaire (73) étant mesurée perpendiculaire à la première direction d'extension (72) et parallèle au plan d'extension (70),
une seconde portion linéaire (65) dans laquelle la garniture d'étanchéité (13) s'étend le long d'une seconde direction d'extension (75) parallèle au plan d'extension (70), dans laquelle la garniture d'étanchéité (13) a une largeur de seconde portion linéaire (76) sur l'ensemble de la seconde portion linéaire (65), la largeur de seconde portion linéaire (76) étant mesurée perpendiculaire à la seconde direction d'extension (75) et parallèle au plan d'extension (70), la seconde direction d'extension (75) étant différente de la première direction d'extension (72), et
une portion arquée (64) interposée entre la première portion linéaire (63) et la seconde portion linéaire (65), dans laquelle la garniture d'étanchéité (13) s'étend d'une première extrémité libre (36) de la garniture d'étanchéité (13) à une seconde extrémité libre (37) de la garniture d'étanchéité (13).

2. Valve de mise à niveau de cabine (10) selon la revendication 1, dans laquelle la garniture d'étanchéité (13) est dimensionnée pour venir en butée sur le corps (11) et le couvercle (12) d'une manière à ajustement rapproché.

3. Valve de mise à niveau de cabine (10) selon l'une quelconque des revendications 1 ou 2, dans laquelle la garniture d'étanchéité (13) est compressible dans une direction perpendiculaire à la première face principale (34) et à la seconde face principale (35), dans laquelle la garniture d'étanchéité (13) est comprimée d'une hauteur de garniture d'étanchéité non comprimée à la hauteur de garniture d'étanchéité (33) entre le couvercle (12) et le corps (11).

4. Valve de mise à niveau de cabine (10) selon la revendication 3, où une différence entre la hauteur de garniture d'étanchéité non comprimée (33') et la hauteur de garniture d'étanchéité (33) vaut au moins 0,1 fois la hauteur de garniture d'étanchéité non comprimée (33') et au plus 0,55 fois la hauteur de garniture d'étanchéité non comprimée (33').

5. Valve de mise à niveau de cabine (10) selon l'une quelconque des revendications 1 à 4, dans laquelle la hauteur de garniture d'étanchéité (33) est d'au moins 0,6 mm et d'au plus 1,1 mm.

6. Valve de mise à niveau de cabine (10) selon l'une quelconque des revendications 1 à 5, dans laquelle la portion arquée (64) comprend une paroi externe de portion arquée (95) ayant un premier rayon de courbure supplémentaire (93) autour d'un centre de courbure supplémentaire (92) et une paroi interne de portion arquée (94) ayant un second rayon de courbure supplémentaire (94) autour du centre de courbure supplémentaire (92).

7. Valve de mise à niveau de cabine (10) selon la revendication 6, dans laquelle la largeur de première portion linéaire (73) est égale à l'une et/ou l'autre de :
la largeur de seconde portion linéaire (76) ;
une différence (74) entre le premier rayon de courbure supplémentaire (93) et le second rayon de courbure supplémentaire (94).

8. Valve de mise à niveau de cabine (10) selon l'une quelconque des revendications précédentes, dans laquelle le couvercle (12) ou le corps (11) comprend un évidement (41) dans lequel la garniture d'étanchéité (13) est agencée.

9. Valve de mise à niveau de cabine (10) selon la revendication 8, dans laquelle le corps (11) comprend une portion surélevée (24) s'étendant dans l'évidement (41), dans laquelle la garniture d'étanchéité (13) est placée en sandwich entre la portion surélevée (24) et une portion de surface (42) du couvercle (12) délimitant l'évidement (41).

10. Valve de mise à niveau de cabine (10) selon l'une quelconque des revendications précédentes, dans laquelle la garniture d'étanchéité (13) comprend des passages (38, 38', 39, 39'), comprenant l'un et/ou l'autre de :
un passage d'élément de fixation (38, 38') destiné à un élément de fixation (30) qui fixe le couvercle (12) au corps (11) ;
un passage de section tubulaire (39, 39') destiné à une section tubulaire (28) du corps (11) ou du couvercle (12).

11. Système de mise à niveau de cabine (100), comprenant :
la valve de mise à niveau de cabine (10) selon l'une quelconque des revendications précédentes ;
une source de gaz sous pression (114) conçue pour alimenter du gaz sous pression à l'orifice d'alimentation (14) ;
un sac à gaz (106) conçu pour gonfler dans la première opération de mise à niveau et pour dégonfler dans la seconde opération de mise à niveau ; et
une tringlerie (104) reliée à l'élément de commande (18) et conçue pour déplacer l'élément de commande (18) d'une position neutre à l'une ou l'autre de la première position ou de la seconde position en réponse à un changement de charge agissant sur une cabine d'un véhicule.

12. Véhicule utilitaire (112), comprenant :
une cabine (113) ; et
le système de mise à niveau de cabine (100) selon la revendication 11,
dans lequel le sac à gaz (106) est conçu d'une manière telle qu'un gonflage du sac à gaz (106) amène une partie de la cabine (113) à se relever et qu'un dégonflage du sac à gaz (106) amène la partie de la cabine (113) à être abaissée, et
dans lequel la tringlerie (104) et l'élément de commande (18) sont conçus d'une manière telle que le changement de charge agissant sur la cabine amène la tringlerie (104) à déplacer l'élément de commande (18) soit vers la première position (101) soit vers la seconde position (102).

13. Procédé d'assemblage de la valve de mise à niveau de cabine (10) selon l'une quelconque des revendications 1 à 10, le procédé comprenant :
l'assemblage du corps (11) et du couvercle (12) ; et
l'interposition de la garniture d'étanchéité (13) entre le corps (11) et le couvercle (12).

14. Utilisation de la valve de mise à niveau de cabine (10) selon l'une quelconque des revendications 1 à 10 pour réduire ou empêcher une entrée de corps étranger dans la valve de mise à niveau de cabine (10) pendant le fonctionnement d'un véhicule utilitaire (112) comprenant la valve de mise à niveau de cabine (10).
